(19) Europäisches Patentamt
European Patent Office
Office européen des brevets

(11) **EP 4 503 563 A1**

(12) **EUROPEAN PATENT APPLICATION**

(43) Date of publication:
**05.02.2025 Bulletin 2025/06**

(21) Application number: **23189838.8**

(22) Date of filing: **04.08.2023**

(51) International Patent Classification (IPC):
**H04L 47/28** (2022.01)       **G06Q 10/0631** (2023.01)
**H04L 41/16** (2022.01)        **H04L 41/50** (2022.01)
**H04L 67/12** (2022.01)        **H04W 72/50** (2023.01)

(52) Cooperative Patent Classification (CPC):
**H04L 47/28;** G06Q 10/0631; H04L 41/0806;
H04L 41/145; H04L 67/12; H04W 74/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventor: **Chubanov, Sergei
70197 Stuttgart (DE)**

Remarks:
Amended claims in accordance with Rule 137(2)
EPC.

(54) **SYSTEM AND METHOD FOR SCHEDULING DATA TRANSMISSIONS BY DEVICES IN A COMMUNICATIONS NETWORK**

(57)     A system and method are provided for scheduling data transmissions in a data transmission cycle by devices in a communications network. A schedule may be determined by determining an initial transmission order of the devices in the data transmission cycle, providing a procedure which uses a transmission order as input and which outputs a feasible schedule and a total duration of the data transmission cycle for the feasible schedule, wherein the procedure generates the feasible schedule to satisfy one or more data transmission constraints imposed by the communications network and/or the devices, performing the procedure using the initial transmission order as input, and iteratively adjusting the initial transmission order and performing the procedure to obtain an adjusted schedule with an adjusted transmission order which minimizes the total duration of the data transmission cycle.

Fig. 3

EP 4 503 563 A1

## Description

### Field of the invention

The presently disclosed subject matter relates to a computer-implemented method for scheduling data transmissions in a data transmission cycle by devices in a communications network, to a computer-readable medium comprising instructions for causing a processor system to perform the method, to a scheduling system comprising a processing subsystem configured to perform the method, and to a communications network comprising the scheduling system.

### Background of the invention

Communications networks are essential in modern-day life. For example, telecommunications networks enable data to be transferred in a seemingly seamless manner across the world, enabling not only voice calls but also the modern Internet. While such telecommunications networks are typically distributed across different systems and devices, communications networks may also be present within individual systems or devices. For example, in vehicles, a controller area network, also referred to as an CAN bus, may allow microcontrollers and devices to communicate with each other without using a host computer. Another example is a sensor network in which a group of sensors together monitor and record the physical conditions of an environment.

However, there may be data transmission constraints imposed by the communications network. For example, links within a telecommunications network, e.g., physical links or virtual links, may be limited in their bandwidth. Another example is that wireless channels used in a wireless telecommunications network may impose limits on which channels devices are allowed to be used, but also the type of access to a channel, e.g., which time slots to use, etc. There may also be constraints imposed by the devices which use the communications network. For example, it may be an inherent property of certain devices that they are not able to receive and transmit data at the same time.

If these constraints are not properly taken into account in the data transmissions of devices, this may lead to so-called interference. For example, there may be an overload or overuse of a shared channel or a shared frequency band amongst devices, which is a common problem occurring in wireless networks. Such interference may negatively affect the data transmissions, e.g., in terms of overall throughput of the communications network or quality-of-service experienced by individual devices.

It is known to improve the quality of data transmission using scheduling techniques. For example, when devices periodically transmit data, e.g., in a data transmission cycle which repeats itself for at least a number of cycles, such scheduling techniques may define a transmission order for the devices, e.g., indicating which device is to transmit first, which device is to transmit second, etc., and in some cases may explicitly define relative start times for the data transmission by the devices. Optimal or suitable schedules could for example attempt to keep all devices busy in transmitting data, balancing the load of the network, whilst at the same allowing the devices to share all system or network resources in an effective manner, thereby balancing the performance of the network. Such scheduling may for example maximize the throughput, which typically refers to the total amount of data transmissions completed per time unit, or minimize the total duration of the data transmission cycle.

An example of scheduling is the scheduling for so-called time-sensitive networking (TSN), which is a set of IEEE 802.1 standards designed to provide precise time synchronization and bounded low latency for data transmission over Ethernet networks. TSN addresses the need for real-time communication in various applications such as industrial automation, automotive systems, and avionics. See for example Dürr & Nayak (2016): *No-wait Packet Scheduling for IEEE Time-sensitive Networks (TSN)* and Yajnanarayana et al. (2017): *Optimal Scheduling for Interference Mitigation by Range Information*, which describes an example of such scheduling for TSN.

Disadvantageously, typical approaches to scheduling may require the communications network to be explicitly modelled to a significant degree. There are many situations where explicit modelling may be infeasible, for example due to the complexity of the communications network in question, the environment in which it is deployed, or due to incompleteness of information about the communications network and its environment.

### Summary of the Invention

It would be desirable to enable data transmissions in a data transmission cycle by devices in a communications network to be scheduled in a manner in which explicit modelling of the communications network is not required or to a lesser degree.

In accordance with a first aspect of the invention, as defined by claim 1, a computer-implemented method is provided for scheduling data transmissions in a data transmission cycle by devices in a communications network. In accordance with a further aspect of the invention, a computer-readable medium is provided as defined by claim 13. In accordance with a further aspect of the invention, as defined by claim 14, a scheduling system is provided which is configured to perform a scheduling method. In accordance with a further aspect of the invention, a communications network as defined by claim 15 is provided comprising a scheduling system.

The above measures provide a scheduling system and method for data transmissions by devices in a communications network, such as a wired or wireless communications network or combinations thereof. Schematically, such a communications network may be considered as a graph, which graph may include nodes and edges and in which a node may represent a communication device or a group of such devices and an edge between two nodes may indicate that there exists a connection between the two nodes, meaning that the two devices or two groups of devices can communication with each other via the transmission of data. The data which may be transmitted may be any type of data, such as messages of all kinds, signals of all kinds, sensor data obtained from one or more sensors, such as radar sensors, lidar sensors, ultrasound sensors, image sensor, etc. The data transmissions by the devices in the communications network may take place periodically, meaning that the data transmissions by the devices in the communications network may periodically repeat themselves. A respective period of the data transmissions may be referred to as a data transmission cycle or as a report cycle for the case that the data transmissions involve a reporting of data to other device(s). For example, in case the data transmissions repeat themselves every second, the data transmission cycle may be 1 second long.

In accordance with the above measures, the data transmissions by the devices in the communications network may be scheduled as follows. For an individual device as sending device, timing information may be determined. Such timing information may be indicative of a duration of a data transmission by the sending device to each respective receiving device during the data transmission cycle. Such timing information may for example be obtained by measurement, for example by transmitting a unit of data, e.g., a packet of data of a certain size, from each individual device as sending device, and timing the time it takes to receive and in some cases to also process the unit of data by a receiving device. As elucidated elsewhere, a network probe may be used for this purpose. Alternatively, timing information may be measured differently or estimated.

A schedule for the data transmissions by the devices in the data transmission cycle may be obtained as follows. Such a schedule may define at least start times for the data transmissions by the devices, for example as respective time stamps which lie between the start time and the end time of the data transmission cycle, with a time stamp representing a time at which devices may start transmitting. Obtaining the schedule may involve determining an initial transmission order of the devices in the data transmission cycle. This initial transmission order may serve as a starting point for determining the schedule, and may be - and typically is - adjusted later on. The initial transmission order may be used as input to a procedure which outputs a feasible schedule and a total duration of the data transmission cycle for the feasible schedule. As will be elucidated elsewhere, the timing information may be an additional input in some embodiments of the procedure while it may not be an input in other embodiments of the procedure. The procedure may in general be configured to generate the feasible schedule to satisfy one or more data transmission constraints imposed by the communications network and/or the devices. In other words, the procedure may seek to generate a schedule which adheres to the data transmission constraints, or at least as best as possible. The adjective 'feasible' may thus be understood as referring to a schedule in which the one or more data transmission constraints are not violated, or only to a minimal degree. For example, in case devices cannot simultaneously receive and send data, the procedure may seek to generate a schedule in which devices will not need to simultaneously receive and send data in a data transmission cycle.

Having obtained a feasible schedule for the initial transmission order, the transmission order may then be iteratively adjusted, and the procedure may be executed after each adjustment of the transmission order to determine a feasible scheduling and total duration of the data transmission cycle for the adjusted transmission order. The adjustment process may be repeated, e.g., in a loop, for example for a certain number of times, or until the total duration of the data transmission cycle is below a certain length, or until any other type of objective is reached. Having completed the adjustment process, the adjusted schedule may be output in form of scheduling data, which scheduling data may for example be used to schedule the data transmissions in the data cycle of the communications network.

Advantageously, since the above measures do not require explicit modelling of the communications network, they may be applied to situations where such explicit modelling of a communications network may be infeasible. For that purpose, a procedure is provided which outputs a feasible, but in most cases not-yet optimal schedule for a certain transmission order. To optimize the schedule, the transmission order is adjusted. Thereby, the task of optimizing the schedule may be considered to be reformulated as a task of optimizing the transmission order, which may be a simpler problem to address. Additionally, the problem of determining a feasible schedule and the problem of determining an optimal schedule are now separated, which allows separate processes to be employed to optimize for each individual problem.

In an embodiment, a machine learning model is used to iteratively adjust the initial transmission order and to perform the procedure to obtain the schedule with the adjusted transmission order. Such a machine learning model may be trained for the aforementioned task, for example in a supervised or non-supervised manner.

In an embodiment, the transmission order of the devices in the data transmission cycle may be determined and adjusted using a derivative-free optimization technique. It has been found that derivative-free optimization techniques, which are also known as 'black-box' optimization techniques, are well-suited to adjust the transmission order as such optimization techniques handle non-differentiable functions and uncertainties well, as they don't require functions to be differentiable or noise-free. This allows the problem of adjusting the transmission order to be formulated as the optimization of a black-box function, with the optimization using function evaluations and without explicit mathematical expressions or gradients. An additional advantage may be that derivative-free optimization techniques may be simpler to implement.

In an embodiment, the usage of such a derivative-free optimization technique comprises using polyhedral classifiers for binary classification to approximately represent upper and lower level sets of an objective function which is numerically optimized. The adjustment of the transmission order may be posed as a binary classification problem. The binary classification problem may in turn be reduced to learning convex polyhedral in Hilbert spaces. The use of such polyhedral classifiers may offer advantages in computational complexity.

In an embodiment, in the usage of such a derivative-free optimization technique using polyhedral classifiers for binary classification, an auxiliary function is used, comprising a scalar value corresponding to an evaluation of finite samples from a unit sphere in real space with as a dimension a total number of the devices in the communications network, such as a difference between an average and a standard deviation and a ratio of the average and the standard deviation, wherein the average and the standard deviation correspond to an evaluation of the data transmission cycle or to an evaluation of the scheduling as a function of elements of the finite samples from the unit sphere.

In an embodiment, the procedure comprises performing a binary search to find a feasible start time for a data transmission from a respective sending device, wherein performing the binary search comprises minimally shifting a start time of the sending device subject to the shifting not violating the one or more data transmissions constraints, wherein a magnitude of the minimally shifting is determined as a function of an accuracy parameter. In other words, in each iteration of the 'for' loop, a binary search may be performed to find a feasible start time for sending a unit of data from the device. Performing a binary search is a time-efficient and easy-to-implement way of carrying out this procedure for all types of communications networks.

In an embodiment, the procedure comprises determining a minimal feasible start time for a data transmission from a respective sending device as an integer multiple of an accuracy parameter subject to the shifting not violating the one or more data transmissions constraints. In other words, the starting times may be chosen as small as possible up to an accuracy parameter in each iteration of the 'for' loop, where 'as small as possible' still satisfies the constraints for data transmissions.

In an embodiment, the initial transmission order of the devices is determined in form of an initial schedule for the devices in the data transmission cycle, the procedure uses a schedule as input and outputs a feasible schedule and a total duration of the data transmission cycle for the feasible schedule, wherein the procedure comprises iteratively shifting the schedule by an earliest start time in the schedule and scaling the schedule in time using a scaling parameter until a feasible schedule is obtained, the procedure is performed using the initial schedule as input, and the initial schedule is iteratively adjusted using the procedure to obtain an adjusted schedule which minimizes the total duration of the data transmission cycle. In other words, a schedule, which may be a vector, is used as input to construct a nonnegative second vector with pairwise different components, which second vector may then be scaled until a feasible schedule is obtained.

In an embodiment, the timing information is determined by recording the duration of the data transmissions in the communications network, for example using a network tap. Such network taps are known per se and may be used to obtain the timing information which is used as input to the procedure determining the feasible schedule.

In an embodiment, the scheduling data is sent to the devices to configure the devices with the schedule. This way, the devices may be configured with the schedule.

In an embodiment, the devices comprise one or more sensors which are configured to transmit sensor data in each data transmission cycle. The sensor data may comprise for example radar data, lidar data, ultrasound data, or image sensor data.

In an embodiment, the communications network comprises one or a combination of a wireless network and a wired network. The communications network may thus be a wired, wireless or hybrid-type of communication network. In a specific embodiment, the communications network may be a time sensitive network.

In a further aspect of the invention, a communications network may be provided which comprises the aforementioned scheduling system.

In a further aspect of the invention, the scheduling method and scheduling system omit determining the aforementioned timing information for an individual device as sending device. Instead, a procedure may be provided which can determine the feasible schedule based on the transmission order as input and the data transmission constraint(s) as limits to determine a feasible schedule. Accordingly, the scheduling method and scheduling system may determine a schedule defining at least start times for the data transmissions by the devices in the data transmission cycle by:

**EP 4 503 563 A1**

- determining an initial transmission order of the devices in the data transmission cycle;
- providing a procedure which uses a transmission order as input and which outputs a feasible schedule and a total duration of the data transmission cycle for the feasible schedule, wherein the procedure generates the feasible schedule to satisfy one or more data transmission constraints imposed by the communications network and/or the devices;
- performing the procedure using the initial transmission order as input;
- iteratively adjusting the initial transmission order and performing the procedure to obtain an adjusted schedule with an adjusted transmission order which minimizes the total duration of the data transmission cycle; and
- outputting scheduling data defining the adjusted schedule.

Instead of using timing information, the procedure may determine whether a schedule is feasible using for example an oracle which may verify whether a given schedule is feasible in the sense that it leads to reception of each data packet, when a data packet is sent at a scheduled time by each device. This procedure may use the physical network to verify feasibility of the schedule.

It will be appreciated by those skilled in the art that two or more of the above-mentioned embodiments, implementations, and/or optional aspects of the invention may be combined in any way deemed useful. Modifications and variations of any device, system, network, computer-implemented method and/or any computer readable medium, which correspond to the described modifications and variations of another of such entities, can be carried out by a person skilled in the art on the basis of the present description.

**Brief description of the drawings**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

**Fig. 1** shows a communications network, modelled as a graph network;

**Figs. 2, 3 and 4** show examples of schedules for the communications network shown in Fig. 1;

**Fig. 5** shows a method for scheduling data transmissions in a data transmission cycle by devices in a communications network;

**Fig. 6a** shows a computer-readable medium having a writable part comprising a computer program according to an embodiment; and

**Fig. 6b** shows a representation of a processor system according to an embodiment.

**Reference signs list**

The following list of references and abbreviations is provided for facilitating the interpretation of the drawings and shall not be construed as limiting the claims.

| 100 | communications network |
|---|---|
| 101 | first device |
| 102 | second device |
| 103 | third device |
| 112 | connection between first and second device |
| 113 | connection between first devices third device |
| 123 | connection between second and third device |
| 200 | schedule |
| 201 | timing information for first device |
| 202 | timing information for second device |
| 203 | timing information for third device |
| 211 | total duration of data transmission cycle |
| 300 | schedule |
| 301 | timing information for first device |

| 302 | timing information for second device |
|---|---|
| 303 | timing information for third device |
| 311 | total duration of data transmission cycle |
| 400 | schedule |
| 401 | timing information for first device |
| 402 | timing information for second device |
| 403 | timing information for third device |
| 411 | total duration of data transmission cycle |
| 500 | method for scheduling data transmissions by devices in a communications network |
| 510 | determining timing information |
| 520 | determining schedule for the data transmissions by the devices |
| 521 | determining an initial transmission order of the devices |
| 522 | providing a procedure which determines a feasible schedule |
| 523 | performing the procedure using the initial transmission order as input |
| 524 | iteratively adjusting the initial transmission order |
| 530 | outputting scheduling data defining the adjusted schedule |
| 1000 | optical storage device |
| 1001 | memory card |
| 1020, 1021 | stored data |
| 1140 | processor system |
| 1110 | subsystems or components |
| 1120 | processing subsystem |
| 1122 | memory |
| 1124 | dedicated integrated circuit |
| 1126 | communication interface |
| 1130 | interconnect |

**Detailed description of embodiments**

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

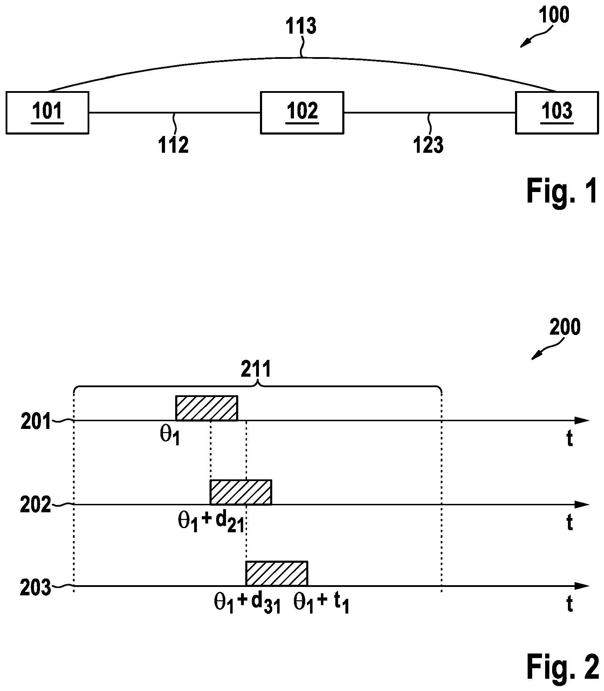

**Fig. 1** shows an example of a communications network 100, which is for sake of explanation shown to be modelled as a graph. This graph is shown to contain three nodes 101, 102, 103, which may represent three communication devices or three groups of such devices. The edges 112, 113, 123 between the nodes indicate that the devices 101-103 are connected with one another, meaning that the three devices can all communicate with one another via respective data transmissions. In the exemplary communications network 100 of Fig. 1, each of the devices 101-103 may transmit data to and receive data from another device. The communications network 100 may for example be a wired or wireless communications network, or a hybrid network.

It is noted that the graph representation of Fig. 1 is a highly simplified representation of a communications network, omitting for example the physical location of the devices, the type and quality of the connections between the devices, etc. Alternatively, when representing a communications network by a graph, such aspects may also be represented in the graph, e.g., by labelling of nodes and edges.

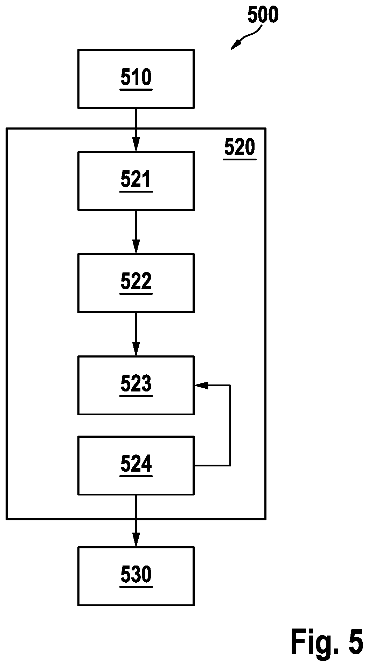

The following describes with reference to Figs. 2-4 and elsewhere a number of detailed embodiments of the scheduling method and system, with more general aspects of the method and system being described with reference to Figs. 5-6b and elsewhere. These detailed embodiments are described using mathematical concepts and approaches which are exemplary of the principles of the presently disclosed subject matter, but which are not intended to limit the presently disclosed subject matter, in that a skilled person will be able to devise other embodiments using the same principles.

In the following, the term 'node' and 'device' may be used interchangeably, meaning that a reference to a node may represent a reference to the corresponding device which is represented by the node. The following continues to refer to the devices 101-103 of Fig. 1, referring to these devices as device 1, 2 and 3. For each of the devices $i$ = 1,2,3, one may denote a subset of devices by $out(i)$ to which device $i$ transmits data, and a subset $in(i)$ of devices from which device $i$

receives messages.

In some of the following embodiments, as an initial step, timing information may be obtained for the communications network. Such timing information may for example be information about time intervals at which a packet sent from node $i$ is processed by nodes $k \in out(i)$. Such timing information may be obtained in various ways, for example by measurement or by estimation. An example of the measurement of timing information may be the following. First, from device $i$, pilot signals, which may form the unit of data, may be sent to the devices $k$. The data packet of a given size, which may form the pilot signal and may correspond to the packet size supposed to be used later for data transmission, may be sent, whilst no other data transmissions are carried out during the process. This way, interference may be avoided. Then, using additional devices such as for example network taps, the timing information related to receiving and optionally processing the data packet may be recorded. This procedure may be repeated for each of the relevant devices $k$, and for each sending device $i$.

Accordingly, for each device $k \in out(i)$, a time interval $[\rho_1^{ki}, \rho_2^{ki}]$ may be obtained during which the data packet has been transmitted from device $i$ to device $k$ and has been processed by device $k$. If $[\rho_1^{ii}, \rho_2^{ii}]$ may denote the time interval during which the data packet has been sent by node $i$, $p_{ki} := 1_{[\rho_1^{ki} - \rho_1^{ii}, \rho_2^{ki} - \rho_1^{ii}]}$, may denote the indicator function of the respective time interval $[\rho_1^{ki}, \rho_2^{ki}]$ shifted by $\rho_1^{ii}$.

**Fig. 2** shows an example of timing information 201 for the first device 1, timing information 202 for the second device 2, and timing information 203 for the third device 3. The values $d_{21}$ and $d_{31}$ may denote communication delays between device 101 and devices 102 and 103, respectively. Note that these values do not depend on $\theta_1$. The three graphs 201-203 may be considered to depict $p_{11}, p_{21},$ and $p_{31}$ shifted by $\theta_1$ (i.e, $T^{\theta_1} p_{k1}, k \in [3]$). In this example, device 1 may not be able to simultaneously send and receive messages, as follows from the choice of $p_{11}$: a non-zero choice for $p_{11}$ indicates that the first device is occupied during transmission. The support of the $p_{11}$ shifted by $\theta_1$ may be the interval whose first endpoint is $\theta_1$ and the other endpoint is the time at which device 1 finishes sending the data packet. Here, shifting the interval by $\rho_1^{ii}$ may ensure that $p_{ki}$ may represent a time interval during which the respective device k may process the data packet as it were sent if device $i$ started the communication exactly at time 0. Note that $p_{ki}$ may be assumed to be zero for $i$ not being in the set $in(k)$. Now, $t_i$ may be the maximal time $t$ such that $p_{ki}(t) \neq 0$ for some device $k \in out(i)$, which may be the time during which a data packet from device $i$ reaches all the devices in $out(i)$. Now, the total time duration of the data transmission cycle, which may also be called the report cycle or update cycle, may be the total time duration 211 within which each of the devices $i$ sends and transmits one unit of data to each of the devices in out($i$).

Using the shift operator $T^\alpha$ on real functions (with $\alpha$ real as well), denoted by $T^\alpha f(t) = f(t - \alpha)$, for all real $t$, the problem of minimization of the report cycle, denoted by $\tau$, which may be seen as maximizing the throughput of the network, may be formulated as follows:

$$\min \quad \tau$$
$$\int_0^\infty T^{\theta_i} p_{ki} \cdot T^{\theta_j} p_{kj} dt = 0, \quad \forall k, i, j \in [n], i \neq j,$$

$$T^{\theta_i} p_{ki}(t) = 0, \qquad \forall t \notin [0, \tau], \forall k, \forall i \neq k.$$

A feasible solution to this minimization problem may be denoted by the vector $\theta = (\theta_1, ..., \theta_n)$ of dimension $n$, corresponding to the number of devices in the communications network. The feasible solution may satisfy the constraints of the minimization problem, which may form the feasibility conditions (and which be represent the data transmission constraints as mentioned elsewhere). Together with the eventual, minimized report cycle $\tau$ corresponding to the feasible solution, the pair $(\theta, \tau)$ may be called a feasible configuration of the network, and $\theta$ a feasible schedule of the communcations network. The feasible configuration may give information on possible transmission delays during the data transmission cycle. The components $\theta_i$ may then indicate the points in time $\theta_i, \theta_i + 2\tau, \theta_i + 3\tau, ...$ on which device $i$ may be supposed to transmit a unit of data in the data transmission cycle. The signals $f_1 > 0$ and $f_2 > 0$ may be said to interfere if $\int_0^\infty f_1 f_2 dt > 0$. The feasibility conditions may ensure that the data packets sent according to the respective feasible schedule do not interfere.

The following describes different procedures for generating feasible solutions based on a given transmission order of the devices. Procedures 1 and 2 may receive a permutation $\pi$ of the devices $i \in [n]$ and schedule the data transmission for each $i$ in the order defined by $\pi$. For each device $i$, the respective procedure may determine $\theta_i$ such that the signal from $i$ does not interfere with the signals of the already considered devices. At the end of both procedures, the

duration $\tau$ of the report cycle may be computed. Each procedure may use a sufficiently small value $\delta$, for example as a part of the input or alternatively as an internal parameter, which may serve as an accuracy parameter. By choosing a larger value of $\delta$, one can improve robustness of the solution at the cost of an increased report cycle.

**Procedure 1**

**Input:** $\pi$, $p_{ki}$, $\delta$.

**Output:** Feasible configuration $(\theta, \tau)$.

$\tau := 0$

$J := \emptyset$

$\theta^*_{\pi(1)} := 0$

**for** $i = \pi(2), \dots, \pi(n)$ **do**

$\qquad \theta^*_i := 0$

$\qquad \Delta := \tau + 2 \cdot \delta$

$\qquad \theta^{**}_i := \infty$

$\qquad$ **while** $\Delta > \delta$ **do**

$\qquad\qquad$ **if** for some $k \in [n]$ and $\varepsilon \in [-\delta, \delta]$ signal $T^{\theta^*_i + \varepsilon} p_{ki}$ interferes with some of $T^{\theta^*_j} p_{kj}, j \in J$,

$\qquad\qquad$ **then**

$$\theta^*_i := \theta^*_i + \Delta/2$$

$\qquad\qquad$ **else**

$$\theta^{**}_i := \min\{\theta^{**}_i, \theta^*_i\}$$
$$\theta^*_i := \max\{0, \theta^*_i - \Delta/2\}$$

$\qquad\qquad$ **end if**

$\qquad\qquad \Delta := \Delta/2$

$\qquad$ **end while**

$\qquad \theta_i := \theta^{**}_i$

$\qquad \tau := \max\{\tau, \theta_i + t_i\}$

$\qquad J := J \cup \{i\}$

**end for**

Return $(\theta, \tau)$ where $\theta = (\theta_1, \dots, \theta_n)$.

with the above procedure, binary search may be used at each iteration of the forloop to find a feasible start time for a packet from the current device *i*. The following procedure may be more time-consuming than procedure 1, but in this procedure $\theta_i$ may be chosen as small as possible up to accuracy $\delta$, at each iteration:

**Procedure 2**

**Input:** $\pi$, $p_{ki}$, $\delta$.

**Output:** Feasible configuration $(\theta, \tau)$.

$\tau := 0$

$\theta_{\pi(1)} := 0$

$J := \{\pi(1)\}$

**for** $i = \pi(2), \dots, \pi(n)$ **do**

    Choose the minimum $\theta_i$ being an integral multiple of $\delta$ such that, for each $k \in [n]$, signal $T^{\theta_i} p_{ki}$ does not interfere with any of $T^{\theta_j} p_{kj}$, $j \in J$.

    $J := J \cup \{i\}$

**end for**

$\tau := \max\{\theta_i + t_i : i \in [n]\}$

Return $(\theta, \tau)$ where $\theta = (\theta_1, \dots, \theta_n)$.

A third procedure may receive a vector x as an input, which may represent an initial set of relative start times of data transmissions of devices and may thereby also indicate an initial transmission order. Using x, the third procedure may construct a nonnegative vector *x'* with pairwise different components and scales the nonnegative vector *x'* until a feasible configuration $\theta$ is obtained. The third procedure may not need to use $p_{ki}$ explicitly. Instead, the third procedure may make use of an oracle (which can be implemented in any reasonable way) which verifies whether a given vector $\theta$ is feasible in the sense that it leads to reception of each data packet, when a data packet is sent at time $\theta_i$ by each device i. In this scenario, one may use the physical network to verify feasibility of start times defined by $\theta$, also without using additional network equipment which otherwise would be needed to compute $p_{ki}$. Rather, it may suffice to only determine *out(i)* for each i. For example, to verify feasibility of $\theta$, it may be sufficient to check whether all pilot data packets sent from each i are received by the devices in *out(i)* when using the components of $\theta$ as start times.

**Procedure 3**

**Input:** $x \in \mathbb{R}^n$, with $x_i \neq x_j$ if $i \neq j$, $\delta > 0$.

**Output:** Feasible configuration $(\theta, \tau)$.

Construct vector $x'$ by setting $x_i' := x_i - \min_{j \in [n]} x_j$ for each $i$.

$\gamma^- := 1$

**while** $\theta = \gamma^- x'$ is feasible **do**

    $\gamma^- := \gamma^- / 2$

**end while**

$\gamma^+ := \gamma^-$

**while** $\theta = \gamma^+ x'$ is not feasible **do**

    $\gamma^+ := 2\gamma^+$

**end while**

**while** $\gamma^+ - \gamma^- > \delta$ **do**

    $\gamma := (\gamma^- + \gamma^+)/2.$

    **if** $\theta = \gamma x'$ is feasible **then**

        $\gamma^+ := \gamma$

    **else**

        $\gamma^- := \gamma$

    **end if**

**end while**

$\theta := \gamma^+ x'$

Let $\tau$ be the maximum, over $i \in [n]$, of arrival times of data packets at devices *out(i)* when using $\theta_i$ as a start time of sending a packet from *i*. Return $(\theta, \tau)$.

Given the aforementioned procedures to compute a feasible schedule based on an initial transmission order, or an initial set of start times, the aforementioned initial transmission order or initial set of start times may be adjusted so as to optimize the total time duration of the data transmission cycle. More specifically, an optimization algorithm may be used to determine a reasonably good permutation $\pi$ for procedures 1 and 2 and vector $x$ for procedure 3. This optimization algorithm may be a derivative-free optimization algorithm, e.g., a black-box optimization algorithm, of which parts may be implemented by machine learning, e.g., as a machine learning model.

Let *S* be the unit sphere in $\mathbb{R}^n$ centered at the origin: $S = \{x \in \mathbb{R}^n : \| x \| = 1\}$. Let *A* be one of the above three procedures, procedure 1, procedure 2, or procedure 3. Let $\pi_x$ be the permutation of $[n]$ associated with $x$ which orders the devices in the increasing order of the components of x. The following problem may be considered:

$$\min_{x \in S} f(x),$$

where *f(x)* is equal to $\tau$ in the output of *A* applied to permutation $\pi_x$ or directly to *x* in the case where *A* is procedure 3. Further it is assumed that parameter $\delta$ is fixed.

In the black-box-optimization algorithm described below, evaluations of finite samples *X* from *S* are used. Let *g(f, X)* be the respective evaluation expressed in the form of a scalar value. The *g* may be defined by the user. Some reasonable choices of *g* can be, e.g., *g(X) = avg(f,X) - std(f,X)* or *g(X) = avg(f,X)/std(f,X)* where

$$avg(f, X) = \frac{1}{|X|} \sum_{x \in X} f(x), \quad std(f, X) = \sqrt{\frac{1}{|X|} \sum_{x \in X} (f(x) - avg(f, X))^2}$$

are the average value of *f* on *X* and the standard deviation, respectively.

When defined as in the above examples for *g*, the respective evaluation of X' may be considered to be better than that of *X* if *g(f,X') < g(f,X)*.

In the black-box optimization algorithm, whenever a subset of solutions is sampled, the current best solution *x\** may be updated. The respective new solution for a sample X may be *update(f,X,x\*)* which may be a solution in argmin$_x$*f* if min$_x$*f < f(x\*)*, where *x\** may be the current best solution, or, otherwise, the same *x\**. Every opportunity to update *x\** may be used.

**Black-box optimization algorithm**

**Input:** Problem (1)

**Output:** Feasible configuration $(\theta, \tau)$.

$\mathcal{L}:= \{S\}$

Sample a solution $x^*$ from $S$. Let $x^*$ be the current best solution.

**while** a stopping condition is not reached

(e.g., an upper limit on the number of iterations is not exceeded) **do**

    Using any available strategy, choose $C \in \mathcal{L}$ such that there is no $C' \in \mathcal{L}$ with $parent(C') = C$.

    Sample a finite set $X_C$ from the uniform distribution on $C$.

    (The sample size is a hyperparameter.)

    $x^*:= update(f, X_C, x^*)$

    **if** $C$ is not $S$ **then**

        **if** $g(f, X_{parent(C)}) < g(f, X_C)$ **then**

            $\mathcal{R} = \{C\}$

            $C':= C$

            **while** $C'$ is the only child of $parent(C')$ in $\mathcal{L}$ **do**

                $\mathcal{R}:= \mathcal{R} \cup \{parent(C')\}$

                $C':= parent(C')$

            **end while**

            Remove all elements of $\mathcal{R}$ from $\mathcal{L}$: $\mathcal{L}:= \mathcal{L}\backslash\mathcal{R}$.

        **end if**

    **end if**

    **if** $C$ has not been removed from $\mathcal{L}$ **then**

Choose $\alpha_0$ and $\alpha_1$, $\alpha_0 < \alpha_1$, in the interval $[\min_{X_C} f, \max_{X_C} f]$.

Let $X^- = \{x \in X_C : f(x) \leq \alpha_0\}$ and $X^+ = \{x \in X_C : f(x) \geq \alpha_1\}$.

Find a matrix $H$ and a vector $d$ such that

$$Hx \leq d, \forall x \in X^+, \quad Hx \nleq d, \forall x \in X^-.$$

For each $i \in [m]$, where $m$ is the number of rows of $H$,

let $C_i := \{x \in S : h_i^T x \geq d_i\}$.

Add all $C_i$ to $\mathcal{L}$.

$parent(C_i) := C$ for all $i \in [m]$.

**end if**

**end while**

Let $x^*$ be the best solution found. Return the feasible configuration $(\theta, \tau)$ returned by the selected procedure $A$ w.r.t. $x^*$.

Note that in the above algorithm, whenever a vector is drawn at random from a given set, a zero probability of an event is assumed in which two vector entries with different indices are equal (this is the case if, for example, the uniform distribution is used). In practice, if a vector in which some entries are equal is nevertheless drawn, one may simply apply the random generator again over the respective set until a suitable vector is found, or use any other suitable procedure to ensure that the entries are pairwise different.

To find the matrix $H$ and the vector $d$, a method as, for example, described in DE102020213253 may be used. Moreover, given a hyperparameter $\mu \in (0,1)$, the choice of $\alpha_0$ and $\alpha_1$ in the above algorithm can be made according to one of the following two options (the median or the average value):

- Let $\alpha$ be the median or the average value of the set $\{f(x) : x \in X\}$. Set $\alpha_0 := \alpha - \mu \cdot (\alpha - \min_X f)$ and $\alpha_1 := \alpha + \mu \cdot (\max_X f - \alpha)$.

The existence of a suitable system $Hx \leq d$ used in the algorithm may be guaranteed by the fact that $X^+$ and $X^-$ are subsets of a sphere.

The black-box optimization algorithm may construct a polyhedron (defined by $Hx \leq d$) which contains all solutions of $X^+$ and does not contain any solution of $X^-$. Let $S^+$ and $S^-$ be all the points of $S$ selected according to the same principle as the points of $X^+$ and $X^-$. If $X$ is sufficiently large, then, with a high probability, the random choice of X leads to a polyhedron such that the probability that a randomly chosen point $x$ gets into $S^-$ and at the same time into $X^+$ is less than a given value $\varepsilon$ > 0. This follows from the approach presented in DE102020213253. Therefore, the condition $Hx \nleq d$ may be interpreted as an "approximate" necessary optimality condition because $S^-$ contains an optimal solution and is approximated by the set $\{x \in S : Hx \nleq d\}$. This motivates the branching step of the black-box optimization algorithm where $C_i$ are constructed. At the other iterations, the role of S is played by the respective spherical caps $C$.

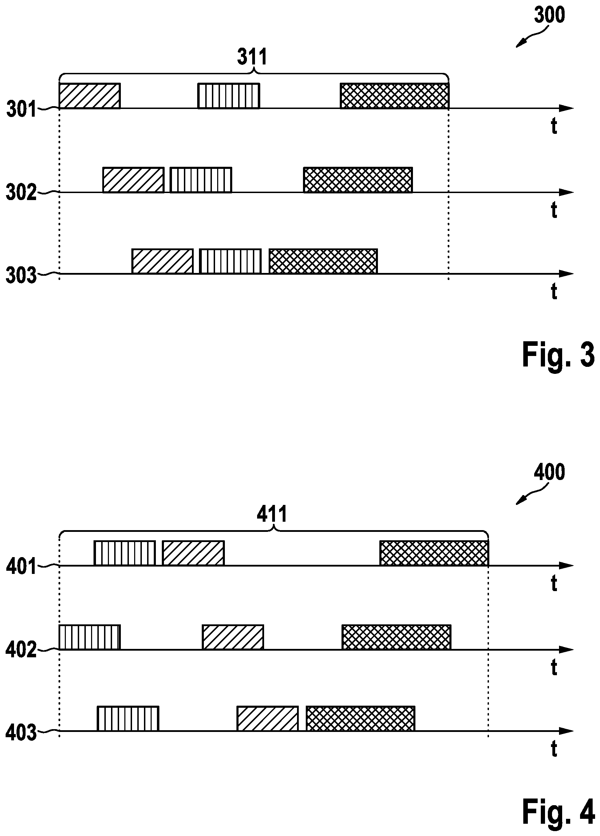

**Figs. 3 and 4** illustrate the adjustment of the transmission order by for example the aforementioned black-box optimization algorithm for an example in which simultaneous transmission and reception are not allowed. More specifically, Figs. 3 and 4 show the data transmissions by devices 1-3 along respective horizontal axis. These data transmissions may occur in accordance with a schedule 300, 400 which is based on a given transmission order. In Fig. 3, the transmission order is $\pi = (1; 2; 3)$, while in Fig. 4, the transmission order is $\pi = (2; 1; 3)$. It can be seen that the latter transmission order leads to a shorter data transmission cycle 411 relative to the data transmission cycle 311 for the former transmission order.

In general, the scheduling methods and systems described in this specification may be used to configure various types of communication networks, including but not limited to those based on TSN standards and TSN specifications. For example, at the configuration phase, all the gates of the TSN devices may be held open and a feasible configuration $(\theta; \tau)$ may be chosen using procedure 3. After that, the respective schedules for nodes $i \in [n]$ should ensure the flow of the data streams without any collisions. If there is a need to secure the respective traffic, one may assign a highest priority to the current data streams and use the TSN mechanisms to fix the respective time slots for each of the nodes. The respective gates may then be open only for the traffic of highest priority in these time slots. Then, if a new data stream is registered which does not belong to the scheduled traffic, this new data stream may be given a lower priority, in which case it will be processed outside of the slots assigned to the traffic of highest priority for which the respective slots have been allocated.

**Fig. 5** shows a method 500 of scheduling data transmissions in a data transmission cycle by devices in a communications network. The method 500 may correspond to an operation of the scheduling system as described elsewhere in this specification. However, this is not a limitation, in that the method 500 may also be performed using another system, apparatus or device. The method 500 may comprise, in a step titled "DETERMINING TIMING INFORMATION" determining 510 timing information as described elsewhere in this specification, and in a step titled "DETERMINING SCHEDULE FOR THE DATA TRANSMISSIONS BY THE DEVICES", determining 520 a schedule defining at least start times for the data transmissions by the devices in the data transmission cycle. The step 520 may comprise, in a sub-step titled "DETERMINING AN INITIAL TRANSMISSION ORDER OF THE DEVICES", determining 521 an initial transmission order of the devices in the data transmission cycle, in a sub-step titled "PROVIDING A PROCEDURE WHICH DETERMINES A FEASIBLE SCHEDULE", providing 522 a procedure which uses a transmission order and the timing information as input and which outputs a feasible schedule and a total duration of the data transmission cycle for the feasible schedule, wherein the procedure generates the feasible schedule to satisfy one or more data transmission constraints imposed by the communications network and/or the devices, in a sub-step titled "PERFORMING THE PROCEDURE USING THE INITIAL TRANSMISSION ORDER AS INPUT", performing 523 the procedure using the initial transmission order as input, and in a sub-step titled "ITERATIVELY ADJUSTING THE INITIAL TRANSMISSION ORDER", iteratively adjusting 524 the initial transmission order and performing the procedure to obtain an adjusted schedule with an adjusted transmission order which minimizes the total duration of the data transmission cycle. The method 500 is further shown to comprise, in a step titled "OUTPUTTING SCHEDULING DATA DEFINING THE ADJUSTED SCHEDULE", outputting 530 scheduling data defining the adjusted schedule. Such scheduling data may represent a data representation of the outputted schedule, which may take any (known) form.

It will be appreciated that the steps of the method 500 of Fig. 5 may be performed in any suitable order, e.g., consecutively, simultaneously, or a combination thereof, subject to a particular order being necessitated, e.g., by input/output relations.

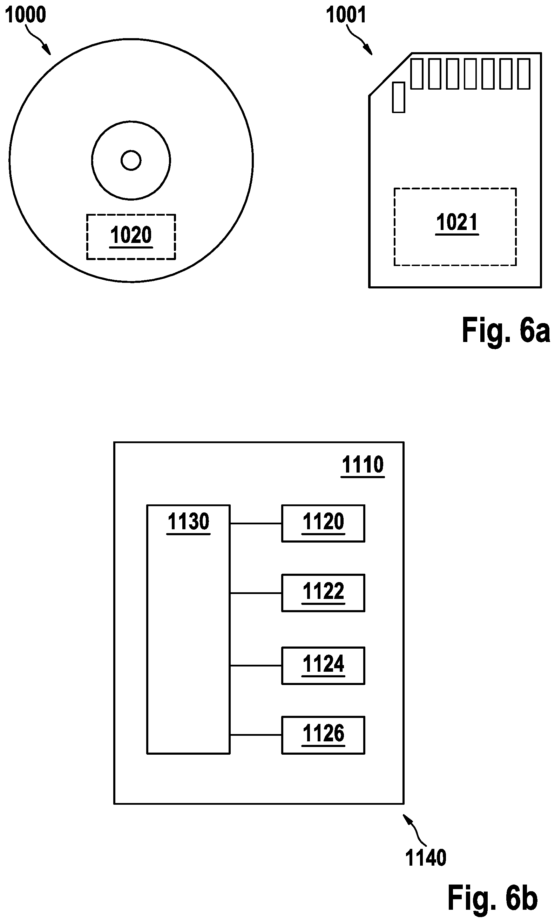

The method(s) may be implemented on a computer as a computer implemented method, as dedicated hardware, or as a combination of both. As also illustrated in **Fig. 6a,** instructions for the computer, e.g., executable code, may be stored on a computer-readable medium 1000, 1001, e.g., in the form of a series 1020, 1021 of machine-readable physical marks and/or as a series of elements having different electrical, e.g., magnetic, or optical properties or values. The computer-readable medium 1000, 1001 may be a transitory or non-transitory medium. Examples of computer-readable mediums include memory devices, optical storage devices, integrated circuits, etc. By way of example, Fig. 6a shows an optical storage device 1000 and a memory card 1001.

**Fig. 6b** shows a processor system 1140 which may implement a scheduling system as described elsewhere in this specification. The processor system may comprise one or more subsystems or components 1110. For example, a processing subsystem 1120 may be provided for executing computer program components to perform scheduling as described elsewhere in this specification. A memory 1122 may be provided for storing programming code, data, etc. A communication subsystem 1126, such as a network interface, may allow communication with other entities. In some examples, a dedicated integrated circuit 1124 may be provided for performing part or all of the processing related to the scheduling. The processing subsystem 1120, the memory 1122, the dedicated IC 1124 and the communication subsystem 1126 may be connected to each other via an interconnect 1130, say a bus. While system 1140 is shown as including one of each described component, the various components may be duplicated in various embodiments. For example, the processing subsystem 1120 may include multiple microprocessors that are configured to independently execute the methods described in this specification or are configured to perform steps or subroutines of the methods described herein such that the multiple processors cooperate to achieve the functionality described in this specification. Further, where the system 1140 is implemented in a cloud computing system, the various hardware components may belong to separate physical systems. For example, the processing subsystem 1120 may include a first processor in a first server and a second processor in a second server.

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. Each functional unit of a respective entity may be implemented in the form of a circuit or circuitry. A respective entity may also be implemented in a distributed manner, e.g., involving different devices or apparatus.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements.

Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented method (500) for scheduling data transmissions in a data transmission cycle by devices in a communications network (100), comprising:

   - determining (510), for an individual device (101) as sending device, timing information (201,202,203;301,302,303;401,402,403) which is indicative of a duration of a data transmission by the sending device (101) to each respective receiving device (102,103) during the data transmission cycle;
   - determining (520) a schedule (200,300,400) defining at least start times for the data transmissions by the devices (101,102,103) in the data transmission cycle by:

     ◦ determining (521) an initial transmission order of the devices (101,102,103) in the data transmission cycle;
     ◦ providing (522) a procedure which uses a transmission order and the timing information (201,202,203;301,302,303;401,402,403) as input and which outputs a feasible schedule and a total duration (211,311,411) of the data transmission cycle for the feasible schedule, wherein the procedure generates the feasible schedule to satisfy one or more data transmission constraints imposed by the communications network (100) and/or the devices (101,102,103);
     ◦ performing (523) the procedure using the initial transmission order as input;
     ◦ iteratively adjusting (524) the initial transmission order and performing the procedure to obtain an adjusted schedule (200,300,400) with an adjusted transmission order which minimizes the total duration (211,311,411) of the data transmission cycle;

   - outputting (530) scheduling data defining the adjusted schedule (200,300,400).

2. A computer-implemented method (500) according to claim 1, further comprising using a machine learning model to iteratively adjust the initial transmission order and to perform the procedure to obtain the schedule (200,300,400) with the adjusted transmission order.

3. A computer-implemented method (500) according to claim 1 or 2, further comprising determining and adjusting the transmission order of the devices (101,102,103) in the data transmission cycle using a derivative-free optimization technique.

4. A computer-implemented method (500) according to any of the preceding claims, wherein the using the derivative-free optimization technique comprises using polyhedral classifiers for binary classification to approximately represent upper level sets and lower level sets of an objective function which is numerically optimized.

5. A computer-implemented method (500) according to claim 4, wherein an auxiliary function is used, comprising a scalar value corresponding to an evaluation of finite samples from a unit sphere in real space with as a dimension a total number of the devices (101,102,103) in the communications network (100), such as a difference between an average and a standard deviation and a ratio of the average and the standard deviation, wherein the average and the standard deviation correspond to an evaluation of the data transmission cycle or to an evaluation of the scheduling as a function of elements of the finite samples from the unit sphere.

6. A computer-implemented method (500) according to any one of claims 1 to 5, wherein the procedure comprises performing a binary search to find a feasible start time for a data transmission from a respective sending device (101), wherein performing the binary search comprises minimally shifting a start time of the sending device (101) subject to the shifting not violating the one or more data transmissions constraints, wherein a magnitude of the minimally shifting is determined as a function of an accuracy parameter.

7. A computer-implemented method (500) according to any one of claims 1 to 5, wherein the procedure comprises determining a minimal feasible start time for a data transmission from a respective sending device (101) as an integer multiple of an accuracy parameter subject to the shifting not violating the one or more data transmissions constraints.

8. A computer-implemented method (500) according to any one of claims 1 to 5, wherein:

   - the initial transmission order of the devices (101,102,103) is determined in form of an initial schedule for the devices (101,102,103) in the data transmission cycle;
   - the procedure uses a schedule as input and outputs a feasible schedule (200,300,400) and a total duration (211,311,411) of the data transmission cycle for the feasible schedule (200,300,400), wherein the procedure comprises iteratively shifting the schedule by an earliest start time in the schedule and scaling the schedule in time using a scaling parameter until a feasible schedule (200,300,400) is obtained;
   - the procedure is performed using the initial schedule as input; and
   - the initial schedule is iteratively adjusted using the procedure to obtain an adjusted schedule which minimizes the total duration (211,311,411) of the data transmission cycle.

9. A computer-implemented method (500) according to any of the preceding claims, further comprising determining the timing information (201,202,203;301,302,303;401,402,403) by recording the duration of the data transmissions in the communications network (100), for example using a network tap.

10. A computer-implemented method (500) according to any of the preceding claims, further comprising sending the scheduling data to the devices (101,102,103) to configure the devices (101,102,103) with the schedule (200,300,400).

11. A computer-implemented method (500) according to any of the preceding claims, wherein the devices (101,102,103) comprise one or more sensors which are configured to transmit sensor data in each data transmission cycle.

12. A computer-implemented method (500) as in any of the preceding claims, wherein the communications network (100) comprises one or a combination of a wireless network and a wired network.

13. A transitory or non-transitory computer-readable medium (1000, 1001) comprising data (1020, 1021) representing a computer program, the computer program comprising instructions for causing a processor system to perform the method according to any one of claims 1 to 12.

14. A scheduling system (1140) comprising a processing subsystem (1120) configured to perform the method according to any one of claims 1 to 12 to determine a schedule for devices in a communications network and an output interface (1126) to output scheduling data defining the schedule.

15. A communications network (100) comprising the scheduling system according to claim 14.

**Amended claims in accordance with Rule 137(2) EPC.**

1. A computer-implemented method (500) for scheduling data transmissions by devices in a communications network (100), wherein the data transmissions by the devices in the communications network periodically repeat themselves, wherein a respective period of the data transmissions represents a data transmission cycle , wherein the data transmission cycle repeats itself for at least a number of cycles, the method (500) comprising:

   - determining (510), for each individual device (101) as sending device, timing information (201,202,203;301,302,303;401,402,403) which is indicative of a duration of a data transmission by the sending device (101) to each respective receiving device (102,103) during the data transmission cycle;
   - determining (520) a schedule (200,300,400) defining at least start times for the data transmissions by the devices (101,102,103) in the data transmission cycle by:

     ∘ determining (521) an initial transmission order of the devices (101,102,103) in the data transmission cycle;
     ∘ providing (522) a procedure which uses a transmission order and the timing information (201,202,203;301,302,303;401,402,403) as input and which outputs a feasible schedule and a total duration (211,311,411) of the data transmission cycle for the feasible schedule, wherein the procedure generates the feasible schedule to satisfy one or more data transmission constraints imposed by the communications network (100) and/or the devices (101,102,103);

∘ performing (523) the procedure using the initial transmission order and the timing information as input;

∘ iteratively adjusting (524) the initial transmission order and performing the procedure to obtain an adjusted schedule (200,300,400) with an adjusted transmission order which minimizes the total duration (211,311,411) of the data transmission cycle;

- outputting (530) scheduling data defining the adjusted schedule (200,300,400).

2. A computer-implemented method (500) according to claim 1, further comprising using a machine learning model to iteratively adjust the initial transmission order and to perform the procedure to obtain the schedule (200,300,400) with the adjusted transmission order.

3. A computer-implemented method (500) according to claim 1 or 2, further comprising determining and adjusting the transmission order of the devices (101,102,103) in the data transmission cycle using a derivative-free optimization technique.

4. A computer-implemented method (500) according to any of the preceding claims, wherein the using the derivative-free optimization technique comprises using polyhedral classifiers for binary classification to approximately represent upper level sets and lower level sets of an objective function which is numerically optimized.

5. A computer-implemented method (500) according to claim 4, wherein an auxiliary function is used, comprising a scalar value corresponding to an evaluation of finite samples from a unit sphere in real space with as a dimension a total number of the devices (101,102,103) in the communications network (100), such as a difference between an average and a standard deviation and a ratio of the average and the standard deviation, wherein the average and the standard deviation correspond to an evaluation of the data transmission cycle or to an evaluation of the scheduling as a function of elements of the finite samples from the unit sphere.

6. A computer-implemented method (500) according to any one of claims 1 to 5, wherein the procedure comprises performing a binary search to find a feasible start time for a data transmission from a respective sending device (101), wherein performing the binary search comprises minimally shifting a start time of the sending device (101) subject to the shifting not violating the one or more data transmissions constraints, wherein a magnitude of the minimally shifting is determined depending on an input accuracy parameter and/or an internal accuracy parameter.

7. A computer-implemented method (500) according to any one of claims 1 to 5, wherein the procedure comprises determining a minimal feasible start time for a data transmission from a respective sending device (101) as an integer multiple of an input accuracy parameter and/or an internal accuracy parameter subject to the shifting not violating the one or more data transmissions constraints.

8. A computer-implemented method (500) according to any one of claims 1 to 5, wherein:

- the initial transmission order of the devices (101,102,103) is determined in form of an initial schedule for the devices (101,102,103) in the data transmission cycle;
- the procedure uses a schedule as input and outputs a feasible schedule (200,300,400) and a total duration (211,311,411) of the data transmission cycle for the feasible schedule (200,300,400), wherein the procedure comprises iteratively shifting the schedule by an earliest start time in the schedule and scaling the schedule in time using a scaling parameter until a feasible schedule (200,300,400) is obtained;
- the procedure is performed using the initial schedule as input; and
- the initial schedule is iteratively adjusted using the procedure to obtain an adjusted schedule which minimizes the total duration (211,311,411) of the data transmission cycle.

9. A computer-implemented method (500) according to any of the preceding claims, further comprising determining the timing information (201,202,203;301,302,303;401,402,403) by recording the duration of the data transmissions in the communications network (100), for example using a network tap.

10. A computer-implemented method (500) according to any of the preceding claims, further comprising sending the scheduling data to the devices (101,102,103) to configure the devices (101,102,103) with the schedule (200,300,400).

11. A computer-implemented method (500) according to any of the preceding claims, wherein the devices (101,102,103) comprise one or more sensors which are configured to transmit sensor data in each data transmission cycle.

12. A computer-implemented method (500) as in any of the preceding claims, wherein the communications network (100) comprises one or a combination of a wireless network and a wired network.

13. A transitory or non-transitory computer-readable medium (1000, 1001) comprising data (1020, 1021) representing a computer program, the computer program comprising instructions for causing a processor system to perform the method according to any one of claims 1 to 12.

14. A scheduling system (1140) comprising a processing subsystem (1120) configured to perform the method according to any one of claims 1 to 12 to determine a schedule for devices in a communications network and an output interface (1126) to output scheduling data defining the schedule.

15. A communications network (100) comprising the scheduling system according to claim 14.

**Fig. 1**

**Fig. 2**

Fig. 3

Fig. 4

500

510

520

521

522

523

524

530

Fig. 5

1000

1020

1001

1021

**Fig. 6a**

1110

1130

1120

1122

1124

1126

1140

**Fig. 6b**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/029977 A1 (OBRADOVIC DRAGAN [DE] ET AL) 2 February 2023 (2023-02-02) | 1,6-8, 10-15 | INV. H04L47/28 |
| Y | * abstract; figures 1-9 * * paragraphs [0060], [0062], [0071], [0073], [0085] – [0091], [0097] – [0100], [0102] – [0105], [0109] * * paragraphs [0112] – [0118], [0138], [0142], [0167] – [0185], [0234] – [0250] * | 2-5,9 | G06Q10/0631 H04L41/16 H04L41/50 H04L67/12 H04W72/50 |
| Y | US 2022/404815 A1 (CHUBANOV SERGEI [DE]) 22 December 2022 (2022-12-22) * abstract; figures 1-11 * * paragraphs [0002], [0169], [0178], [0186] – [0197] * | 2-5,9 | |
| A | US 2022/078080 A1 (GINTHOER DAVID OSAMU [DE]) 10 March 2022 (2022-03-10) * abstract; figures 1-5 * * paragraphs [0058] – [0095], [0104] – [0109] * | 1-15 | |
| A | US 2023/156559 A1 (AIJAZ ADNAN [GB]) 18 May 2023 (2023-05-18) * abstract; figures 13-18 * * paragraphs [0148] – [0182] * | 1-15 | TECHNICAL FIELDS SEARCHED (IPC) H04L G06Q H04W |

The present search report has been drawn up for all claims

| Place of search | Date of completion of the search | Examiner |
|---|---|---|
| The Hague | 4 December 2023 | Cranley, Nikki |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 9838

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2023

| Patent document cited in search report | | | Publication date | Patent family member(s) | | | Publication date |
|---|---|---|---|---|---|---|---|
| US 2023029977 | A1 | | 02-02-2023 | CN | 114830610 | A | 29-07-2022 |
| | | | | EP | 4014447 | A1 | 22-06-2022 |
| | | | | US | 2023029977 | A1 | 02-02-2023 |
| | | | | WO | 2021083509 | A1 | 06-05-2021 |
| US 2022404815 | A1 | | 22-12-2022 | CN | 115374990 | A | 22-11-2022 |
| | | | | EP | 4092587 | A1 | 23-11-2022 |
| | | | | US | 2022404815 | A1 | 22-12-2022 |
| US 2022078080 | A1 | | 10-03-2022 | CN | 114245424 | A | 25-03-2022 |
| | | | | EP | 3968576 | A1 | 16-03-2022 |
| | | | | JP | 2022046434 | A | 23-03-2022 |
| | | | | US | 2022078080 | A1 | 10-03-2022 |
| US 2023156559 | A1 | | 18-05-2023 | JP | 7375139 | B2 | 07-11-2023 |
| | | | | JP | 2023073204 | A | 25-05-2023 |
| | | | | US | 2023156559 | A1 | 18-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102020213253

**Non-patent literature cited in the description**

- **DÜRR** ; **NAYAK**. *No-wait Packet Scheduling for IEEE Time-sensitive Networks (TSN)*, 2016

- **YAJNANARAYANA et al.** *Optimal Scheduling for Interference Mitigation by Range Information*, 2017